# EUROPEAN PATENT APPLICATION

(11) **EP 4 432 263 A1**
(43) Date of publication of application: **18.09.2024**
(21) Application number: 23162678.9
(22) Date of filing: 17.03.2023
(51) Int. Cl.: G08G 3/00

(54) **A METHOD FOR DETERMINING A TRAJECTORY FOR A MARINE VESSEL UNDER ENVIRONMENTAL DISTURBANCE**

(71) Applicant: ABB SCHWEIZ AG, 5400 Baden (CH)
(72) Inventor: LINDER, Jonas, 464 93 Mellerud (SE); RAHMAN, Moksadur, 724 76 Västerås (SE)
(74) Representative: Kransell & Wennborg KB

(57) **Abstract**

A computer-implemented method for determining a feasible trajectory for a marine vessel traveling on water, comprising: determining (S102) initial state variables for the marine vessel at the initial position including present position of the marine vessel and a present heading direction (H1) of the marine vessel in relation to the surrounding environment; acquiring (S104) position data (24) indicating positions of obstacles near the marine vessel; acquiring (S106) environmental data (27) including at least one of present wind conditions, wave characteristics, and local sea current speed and direction; estimating (S108) environmental disturbance parameters and respective uncertainties from the environmental data; predicting (S110) subsequent state variables for the marine vessel and respective uncertainties at future time steps for a prediction horizon based on a maneuver model of a marine vessel describing a motion of a marine vessel, the initial state variables, the position data, and the environmental disturbance parameters and respective uncertainties; generating (S112) feasible trajectory data (50, 66) including a trajectory uncertainty (52, 68) for the marine vessel.

## Description

### Field of the Invention

The present invention generally relates to a computer-implemented method for determining a feasible trajectory from an initial position to a subsequent position for a marine vessel traveling on water, and to a control unit for executing the method, to a marine vessel comprising the control unit, and to a corresponding computer program product.

### Background

Trajectory planning is employed for ships to avoid collisions with obstacles. This is especially important for large ships in restricted waters, such as, narrow ports.

To avoid that a ship gets unnecessary close to obstacles, large generic safety margins are often considered. However, this may lead to sub-optimal trajectories and in worst case to collision situations.

Accordingly, there is room for improvement with regards trajectory planning for ships.

### Summary

In view of the above-mentioned and other drawbacks of the prior art, it is an object of the present invention to provide a method for determining a feasible trajectory for a marine vessel that at least partly alleviates the drawbacks of prior art.

According to a first aspect of the invention, there is provided a computer-implemented method for determining a feasible trajectory from an initial position to a subsequent position for a marine vessel traveling on water, the method comprising: determining initial state variables for the marine vessel at the initial position including present position of the marine vessel and a present heading direction of the marine vessel in relation to the surrounding environment; acquiring position data indicating positions of obstacles near the marine vessel; acquiring environmental data including at least one of present wind conditions, wave characteristics, and local sea current speed and direction; estimating environmental disturbance parameters and respective uncertainties from the environmental data; predicting subsequent state variables for the marine vessel and respective uncertainties at future time steps for a prediction horizon based on a maneuver model of a marine vessel describing a motion of a marine vessel, the initial state variables, the position data, and the environmental disturbance parameters and respective uncertainties; and, generating feasible trajectory data including a trajectory uncertainty for the marine vessel based on the prediction.

Complex environments with both static and dynamic obstacles for ships are challenging for trajectory planning. Environmental disturbances affecting the ship adds a further parameter that complicates trajectory planning further. The present invention is at least partly based on the realization to include environmental disturbances and their related uncertainties in trajectory planning. In this way, a systematically calculated margin to obstacles may be achieved and a more reliable and safer feasible trajectory can be predicted.

Environmental disturbances are typically nonlinear and appear as additive and multiplicative effects on the dynamics of the marine vessel. It is therefore advantageous to actively consider the environmental disturbances during the trajectory planning, particularly for collision avoidance scenarios. However, there are typically large variation in the environmental disturbances and using the mean value, for instance, mean wind direction and speed, might not sufficiently capture the real behavior.

Forces and moment acting on a moving marine vessel due to the environmental disturbances may therefore be estimated with uncertainty. At the same time, these estimates and their corresponding uncertainties may be utilized to predict the future states of the marine vessel and associated uncertainties over a prediction horizon.

The predicted future states with associated uncertainties can be used in the trajectory planner to produce a feasible collision free trajectory.

A feasible trajectory indicated in the feasible trajectory data includes positions along a future or upcoming path or trajectory for the marine vessel that is collision free, with a margin provided by the trajectory uncertainty, so that last minute evasive maneuvers can be avoided once the feasible trajectory is travelled.

Generating the feasible trajectory data may be performed by numerical optimal control where control commands of the marine vessel are adjusted, the generated trajectory is analyzed, and if the feasible trajectory is not fulfilled, a further adjustment is performed. That is, a numerical optimal control method may be applied on the maneuver model of the marine vessel to adjust the control commands until the overlay between the marine vessel outline including uncertainty, and potential obstacles is minimized, preferably zero.

Other possible methods for finding the control commands include reinforcement learning and sampling-based methods such as state-lattice planning and hybrid A* path planning.

The ship's position in relation to the surrounding environment might, for example, be described using a coordinate system. The coordinate system may for example be a coordinate system local to the marine vessel, or a coordinate system in the earth's reference frame.

The position data may thus be coordinates in that coordinate system. In one possible implementation the position data is provided by a global position system.

The maneuver model may take both kinematic and kinetic parameters into account for predicting a future state based on the initial state variables, the position data, and the environmental disturbance parameters and respective uncertainties. Although several such models are envisaged, one possible model is described by a mathematical model that models the geometry of the vessel and how it moves through water, see e.g., Kinematic Models for Maneuvering and Seakeeping of Marine Vessels, Perez et al, Modeling, Identification and Control, Vol. 28, No. 1, 2007, pp. 19-30.

According to one embodiment, the method may comprise calculating control commands based on the predicted state variables and predicted uncertainties to control the maneuvering of the marine vessel from the initial position to the subsequent position. For example, a thruster allocation matrix may be used for relating the required forces and torque to operational parameters of the thrusters of the marine vessel. Advantageously, the control commands may be used for autonomously control the marine vessel from the initial position to the subsequent position.

According to one embodiment, the method may comprise maneuvering the marine vessel from the initial position to the subsequent position using the control commands to control thrusters of the marine vessel. Thus, the control commands may actively be used for controlling the operation of the marine vessel. The control commands may be applied to the thrusters by a control unit.

According to one embodiment, the method steps may be repeated for each subsequent time step to continuously update the feasible trajectory data. Thereby, an updated feasible trajectory that is more accurate to the present state of the marine vessel is provided for each time step. In this way an improved trajectory planning is provided which reduces the risk for collisions further.

According to one embodiment, the initial state variables may further comprise at least one of surge and sway velocities, and yaw rate. Adding further variables increases the probability of predicting a safe feasible trajectory.

According to one embodiment, the method may comprise determining respective uncertainties in present position of the marine vessel and the present heading direction of the marine vessel in the coordinate system, and using the uncertainties in predicting the subsequent state variables for the marine vessel and respective uncertainties at future time steps. Accordingly, further uncertainties may be determined and used to improve the prediction of the feasible trajectory. The uncertainties in position and heading direction may be influenced by the uncertainties in the environmental disturbances.

According to one embodiment, the method may comprise retrieving a digital nautical chart, overlaying a virtual representation of the feasible trajectory with uncertainty on the digital nautical chart, performing a confirmation check of the feasible trajectory based on the overlay, and calculating control commands based on the predicted state variables, the predicted uncertainties, and the confirmation check, the control commands being configure to control the maneuvering of the marine vessel from the initial position to the subsequent position Accordingly, overlaying the feasible trajectory with a map may be used as a further check that the feasible trajectory is indeed feasible or if adjustments are required. In some possible implementations it may be included to produce a picture of the digital nautical chart and the overlay on a screen for view of a human operator.

According to one embodiment, the method may comprise determining an uncertainty in the outline of the marine vessel over the prediction horizon, wherein the uncertainty in the outline is included when generating feasible trajectory data.

According to one embodiment, an environmental disturbance parameter and respective uncertainty may be estimated at least for the present wind speed and direction. The wind conditions are a relatively significant source of environmental disturbance. Thus, it is advantageous to ensure that at least the wind conditions are considered.

According to one embodiment, environmental disturbance parameters and respective uncertainties may be estimated for each of present wind conditions and local sea current speed and direction. Hereby, generated feasible trajectory is more accurate by including further sources of environmental disturbances.

In embodiments, the obstacles may be both below sea level and above sea level.

In embodiments, the environmental data may be measured on-board the marine vessel. In this way, the environmental data advantageously represents the environmental conditions at the marine vessel.

It is envisaged that the environmental data may be measured using off-board sensors or a combination of on-board and off-board sensors or equipment.

According to a second aspect of the invention, there is provided a control unit configured to perform the steps of any one of the embodiments of the first aspect.

Further effects and features of the second aspect of the invention are largely analogous to those described above in connection with the first aspect of the invention.

There is further provided a marine vessel comprising the control unit.

According to a third aspect of the invention, there is provided a computer program product comprising program code for determining a feasible trajectory from an initial position to a subsequent position for a marine vessel traveling on water, the computer program product comprises: code for determining initial state variables for the marine vessel at the initial position including present position of the marine vessel and present heading direction of the marine vessel in relation to the surrounding environment; code for acquiring position data indicating positions of obstacles near the marine vessel; code for acquiring environmental data including at least one of present wind conditions, wave characteristics, and local sea current speed and direction; code for estimating environmental disturbance parameters and respective uncertainties from the environmental data; code for predicting subsequent state variables for the marine vessel and respective uncertainties at future time steps for a prediction horizon based on a maneuver model of a marine vessel describing a motion of a marine vessel, the initial state variables, the position data, and the environmental disturbance parameters and respective uncertainties; and, code for generating feasible trajectory data including a trajectory uncertainty for the marine vessel based on the prediction.

Further effects and features of the third aspect of the invention are largely analogous to those described above in connection with the first aspect and the second aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates a marine vessel according to an embodiment of the invention; and
Fig. 2 is a flow-chart of method steps according to embodiments of the present invention;
Fig. 3 schematically illustrates a marine vessel and a feasible trajectory with uncertainty according to embodiments of the present invention; and
Fig. 4 schematically illustrates an example nautical chart with an overlay feasible trajectory according to embodiments of the present invention

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

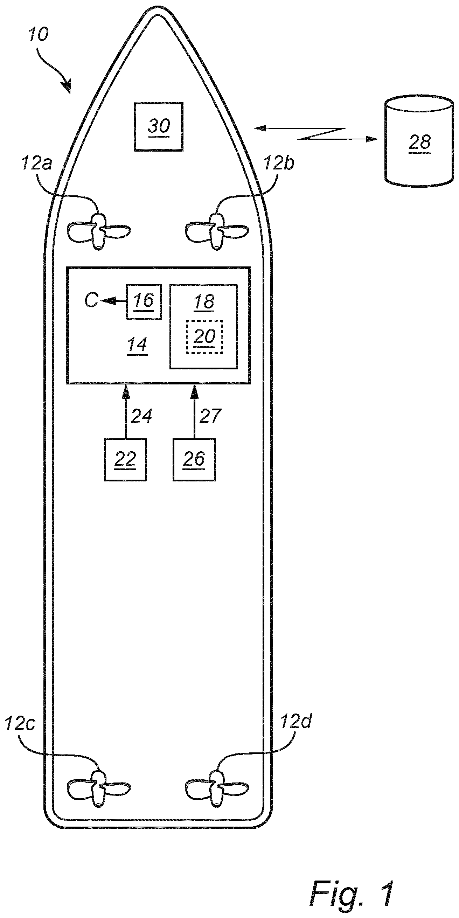

Fig. 1 schematically represents a top view of a marine vessel 10. The marine vessel 10 may for example be a ship or a floating production storage and offloading (FPSO) unit. The vessel 10 comprises a plurality of thrusters, here a first thruster 12a, a second thruster 12b, a third thruster 12c and a fourth thruster 12d. One, several or all of the thrusters 12a-12d may also be referred to with reference numeral "12".

Each thruster 12 could be rotatable in a horizontal plane (parallel with the drawing plane of Fig. 1) into different thrust directions or be mounted in a fixed direction. Each thruster 12 may comprise a propeller and an engine driving the propeller. By increasing an engine speed of the engine, the thrust force of the thruster 12 can be increased, and vice versa. The thrusters 12 are here exemplified as azimuthing thrusters.

The vessel 10 further comprises a control system 14. The control system 14 of this example comprises a control unit 16 and a memory 18. The memory 18 has a computer program stored thereon. The computer program comprises program code which, when executed by the control unit 16, causes the data processing device 16 to perform, or command performance of, various steps described herein.

As shown in Fig. 1, a model 20 of the vessel 10 is stored in the memory 18 or in a remote server 28 accessible using a wireless transmission device 30. The model 20 may for example be a nonlinear model of the vessel 10 describing the motion of the vessel 10 in the horizontal plane.

The vessel 10 of this example further comprises one or more sensors, here exemplified as a position sensor 22. The position sensor 22 is arranged to provide position data 24 to the control system 14. The position data 24 is indicative of a position of the vessel 10 in the horizontal plane. The position sensor 22 may for example be a GPS device further providing position data 24 to the control system 14. In this example, the control system 14 is configured to estimate a state variable of the vessel 10 based on the position data 24. The vessel 10 may use a wide range of sensors alternative to, or in addition to, the position sensor 22 to provide sensor data based on which the control system 14 can estimate the state variables of the vessel 10.

For example, the marine vessel 10 may comprise sensors for measuring environmental conditions such as wind speed and direction, local sea current conditions, or wave characteristics. Environmental data 27 indicating the environmental conditions is provided to the control system 14 from environment sensors 26 on-board the marine vessel, or from remote sensors such as weather stations via the wireless transmission device 30.

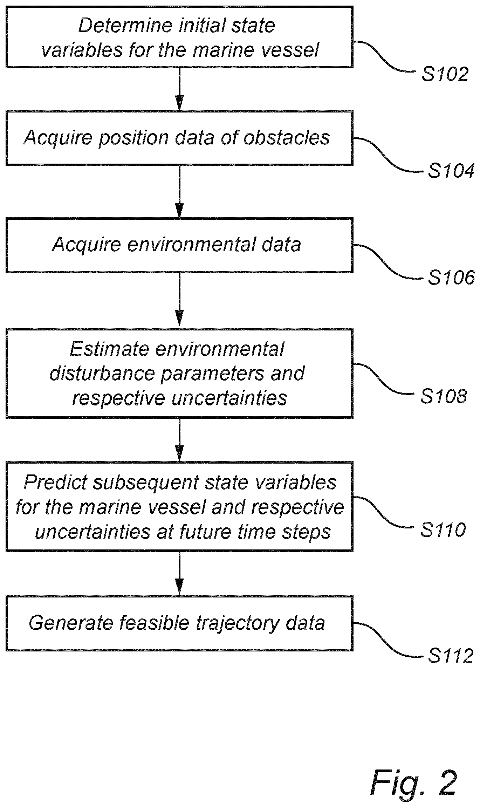

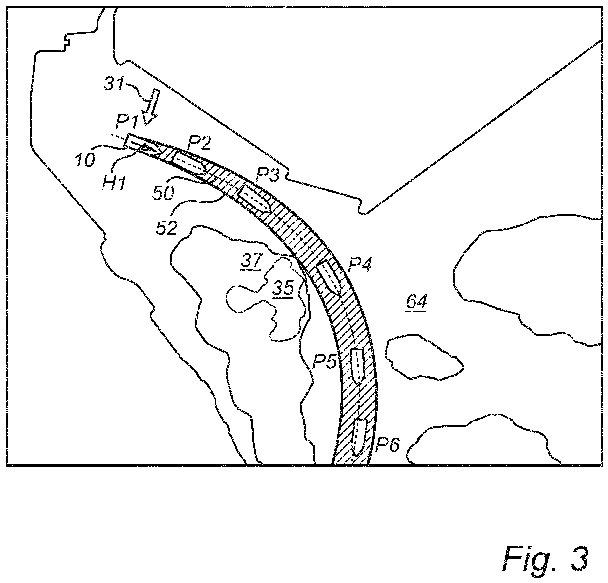

Fig. 2 is a flow-chart of method steps according to one embodiment. The method being a computer-implemented method for determining a feasible trajectory from an initial position to a subsequent position for a marine vessel traveling on water. Fig. 3 schematically illustrates a marine vessel 10 travelling along a trajectory on water.

In step S102, determining initial state variables for the marine vessel 10 at the initial position including present position P1 of the marine vessel and a present heading direction H1 of the marine vessel in relation to the surrounding environment, for instance, through a coordinate system.

The coordinate system may be a local coordinate system in the reference frame of the marine vessel 10. In preferred embodiments, the coordinate system is in the reference frame of Earth.

The position data 24 indicating the initial position, and subsequent positions of the marine vessel 10 may be acquired from a GPS 22 of the marine vessel.

In possible embodiments, the initial state variables may further comprise at least one of present surge and sway velocities, and present yaw rate of the marine vessel 10 either measured by a sensor or estimated by position data.

In step S104, acquiring position data indicating positions of obstacles 35, 37 near the marine vessel 10. The obstacles may be obstacles above sea level, here exemplified as an island 35, but also obstacles 37 below sea level such as shallows or rocks. Obstacles can also be other ships or floating structures.

The position data that indicates positions of obstacles may be acquired from digital maps or electronic charts such as nautical maps stored either in a remote server 28 or in a local memory 18 on the vessel 10. It can also be given by onboard sensors, such as, radar or lidars, or systems, such as, automatic identification system (AIS).

In step S106, acquiring environmental data 27 including at least one of present wind conditions, wave characteristics, and local sea current speed and direction.

In step S108, estimating environmental disturbance parameters and respective uncertainties from the environmental data. In preferred embodiments, an environmental disturbance parameter and respective uncertainty is estimated at least for the present wind speed and direction as indicated by arrow 31 schematically illustrating a side wind. In other possible embodiments, environmental disturbance parameters and respective uncertainties are estimated for each of present wind conditions and local sea current speed and direction.

The uncertainty in the environmental disturbance parameters is related to both the nature of the environmental disturbance parameter, that is, how much they may change over time, but also to the uncertainty in measuring the environmental disturbance parameter. As an example, a measured wind speed and direction is measured using suitable devices, with an uncertainty in the measurement. Furthermore, the wind speed and direction may change rapidly which is another source of uncertainty that may be modelled as a distribution of wind speed and direction with the measured wind speed and direction as respective means.

Similarly, a measured sea current speed and direction is measured using suitable devices, with an uncertainty in the measurement. The sea current and direction may change rapidly which is another source of uncertainty that may be modelled as a distribution of sea current speed and direction with the measured sea current speed and direction as respective means.

In step S110, predicting subsequent state variables for the marine vessel and respective uncertainties at future time steps for a prediction horizon based on a maneuver model of a marine vessel describing a motion of a marine vessel, the initial state variables, the position data, and the environmental disturbance parameters and respective uncertainties.

In step S110, the subsequent state variables are simulated using the maneuver model provided the uncertainties. In other words, the simulation may be performed provided for each of a set of uncertainties in the initial state variables which results in a set of subsequent state variables for each time step. Jointly, the predicted set of subsequent state variables for each uncertainty and time step provides an envelope of possible state variables for each time step.

For example, the uncertainty in the environmental disturbance parameters may be assumed to be normal distributed. By randomly selecting samples from the normal distributed environmental disturbance parameters and performing a simulation or calculation of subsequent state variables for each of the samples, an envelope of possible state variables is determined. This may be based on Monte Carlo simulations. This further provides for uncertainty propagation to subsequent state variables.

As a further example, a worst-case uncertainty may be assumed for which the simulation or calculation of subsequent state variables is performed.

Furthermore, for each time step, a confidence region for the outline of the marine vessel, or the swept area of the marine vessel, may be calculated from a geometric model of the marine vessel. The confidence region is the actual outline of the ship, and an added outer outline according to the uncertainty. In other words, it may be included in the method to determine an uncertainty in the outline of the marine vessel over the prediction horizon. The uncertainty in the outline is included when generating feasible trajectory data. The outline of the ship may be simulated with the uncertainty accounted for.

The marine vessel dynamics may be described by a mathematical model that models the geometry of the vessel and how it moves through water (see e.g., Kinematic Models for Manoeuvring and Seakeeping of Marine Vessels, Perez et al, Modeling, Identification and Control, Vol. 28, No. 1, 2007, pp. 19-30).

The mathematical model of the ship describes the ship's motion induced by the forces acting on it or alternatively the ship's motion given control signals and signals that describe the environmental force, such as, wind speed and direction. One possible approach is a mathematical model that consists of kinematics and kinetics, either split or as a one-model approach. Kinematics purely considers the geometric aspects of motion, without reference to the forces and torque which generate such motions. Kinematics describes the relation between velocity of the vessel with respect to the body-fixed frame and position with respect to an Earth-fixed frame. Kinetics describes the motions of the vessel due to the forces and torques generated by thrusters and environmental disturbances. Kinetics includes Coriolis and damping forces. Further, the vessel dynamics preferably also includes parameters of the capability of the propulsion system of the vessel such as propulsion power, steering actions, reactivity, etc., This mathematical model may be used for calculating the subsequent state variables including a set of uncertainties for the environmental disturbance parameters.

In step S112, generating feasible trajectory data including a trajectory uncertainty for the marine vessel based on the prediction. The feasible trajectory data includes predicted positions, i.e., coordinates for the future position P2-P6 indicating the feasible trajectory 50. Furthermore, uncertainties in environmental disturbances provides an envelope 52 of positions that should not overlap with coordinates of obstacles 35, 37.

In some embodiments, the control unit 16, calculates control commands, C, based on the predicted state variables and predicted uncertainties. The control commands are used to control the maneuvering of the marine vessel from the initial position to the subsequent position. The control unit 16 may have access to an algorithm or function that relates the required force and torque to operational parameters of the thrusters of the marine vessel. The control commands may be used for autonomously control the marine vessel from the initial position P1 to a subsequent position P2-P6.

For example, using numerical optimal control, the control commands of the marine vessel are adjusted until the feasible trajectory is fulfilled when applied on the maneuver model of the marine vessel. Thus, a numerical optimal control, or another suitable method or algorithm may be used to adjust the control commands until the overlay between the marine vessel outline including uncertainty, and potential obstacles is minimized, preferably zero.

Other suitable methods for finding the control commands include reinforcement learning and sampling-based methods such as state-lattice planning and hybrid A* path planning, which methods are known *per* se in the art.

As the marine vessel 10 moves, its position changes and so may also the environmental disturbances. In order to ensure that the control system 14 continuously has access to a correct feasible trajectory, the method steps for determining the feasible trajectory might be repeated for each subsequent time step to continuously update the feasible trajectory data.

In order to further improve the prediction of the subsequent states and the feasible trajectory, step S102 may further comprise determining respective uncertainties in present position of the marine vessel in the present heading direction of the marine vessel in the coordinate system. The uncertainties in present position may be included in step S110 when predicting the subsequent state variables for the marine vessel and respective uncertainties at future time steps. The uncertainty in present position is primary based on the error in the position data as provided by the GPS 22.

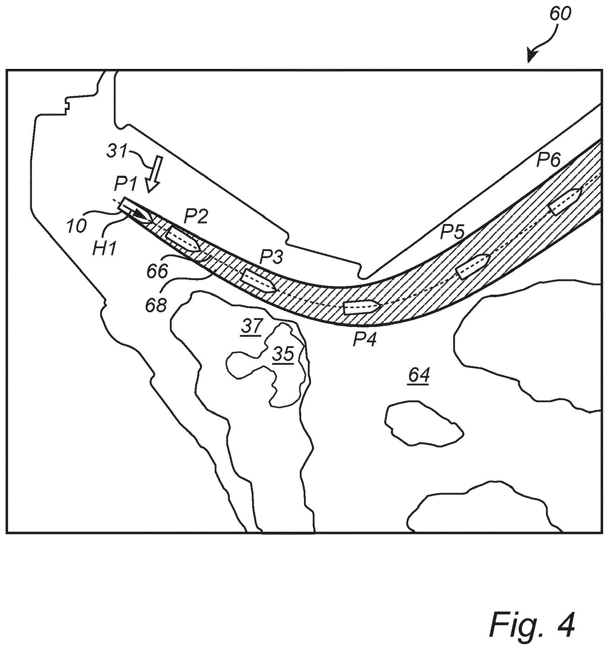

In order to perform a security check of the feasible trajectory, the control unit 16 may retrieve a nautical chart 60 as shown in fig 4. The control unit 16 may retrieve the nautical chart 60 from the remote server 28 or from the internal memory 18 of the control system 14. The nautical chart 60 includes coordinates for an area such as position data for obstacles 35, 37, and open water areas 64. The nautical chart 60 is a digital representation of the area, e.g., an electronic map.

Once the feasible trajectory 66 and trajectory uncertainty 68 are determined, the control unit 16 overlays a virtual representation of the feasible trajectory 66 with uncertainty 68 on the digital nautical chart 60.

In this way, the control unit 16 performs a confirmation check of the feasible trajectory based on the overlay. More specifically, the control unit 16 makes sure that the feasible trajectory 66 and trajectory uncertainty 68 do not overlap with any obstacles on the nautical chart 60 and may make adjustments to the control commands if needed based on the confirmation check.

The computer-implemented method discussed herein, and embodiments thereof may be executed by a control unit 16 that is configured to perform the discussed steps. The marine vessel 10 may comprise the control unit 16. It is also envisaged that the method is performed by a control unit on a server, that is, a cloud-based computation. The marine vessel 10 may then communicate with the remotely located control unit using wireless communication technology for transmitting and receiving data.

Furthermore, a computer program product 20 that may be stored either in the local non-transitory memory 18 or on the remote server 28 is provided. The computer program product 20 comprises: code for determining initial state variables for the marine vessel at the initial position including present position of the marine vessel and present heading direction of the marine vessel in a coordinate system; code for acquiring position data indicating positions of obstacles near the marine vessel; code for acquiring environmental data including at least one of present wind conditions, wave characteristics, and local sea current speed and direction; code for estimating environmental disturbance parameters and respective uncertainties from the environmental data; code for predicting subsequent state variables for the marine vessel and respective uncertainties at future time steps for a prediction horizon based on a maneuver model of a marine vessel describing a motion of a marine vessel, the initial state variables, the position data, and the environmental disturbance parameters and respective uncertainties; and, code for generating feasible trajectory data including a trajectory uncertainty for the marine vessel based on the prediction.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A computer-implemented method for determining a feasible trajectory from an initial position (P1) to a subsequent position (P2) for a marine vessel traveling on water, the method comprising:
determining (S102) initial state variables for the marine vessel at the initial position including a present position of the marine vessel and a present heading direction (H1) of the marine vessel in relation to the surrounding environment;
acquiring (S104) position data (24) indicating positions of obstacles near the marine vessel;
acquiring (S106) environmental data (27) including at least one of present wind conditions, wave characteristics, and local sea current speed and direction;
estimating (S108) environmental disturbance parameters and respective uncertainties from the environmental data;
predicting (S110) subsequent state variables for the marine vessel and respective uncertainties at future time steps for a prediction horizon based on a maneuver model of a marine vessel describing a motion of a marine vessel, the initial state variables, the position data, and the environmental disturbance parameters and respective uncertainties; and,
generating (S112) feasible trajectory data (50, 66) including a trajectory uncertainty (52, 68) for the marine vessel based on the prediction.

2. The method according to claim 1, comprising:
calculating control commands (C) based on the predicted state variables and predicted uncertainties to control the maneuvering of the marine vessel from the initial position to the subsequent position.

3. The method according to claim 2, comprising: maneuvering the marine vessel from the initial position to the subsequent position using the control commands to control thrusters of the marine vessel.

4. The method according to any one of the preceding claims, wherein the method steps are repeated for each subsequent time step to continuously update the feasible trajectory data.

5. The method according to any one of the preceding claims, wherein the initial state variables further comprise at least one of surge and sway velocities, and yaw rate.

6. The method according to any one of the preceding claims, comprising:
determining respective uncertainties in present position of the marine vessel in the present heading direction of the marine vessel in the coordinate system, and using the uncertainties in predicting the subsequent state variables for the marine vessel and respective uncertainties at future time steps.

7. The method according to any one of the preceding claims, comprising:
retrieving a digital nautical chart (60), and
overlaying a virtual representation of the feasible trajectory with uncertainty on the digital nautical chart,
performing a confirmation check of the feasible trajectory based on the overlay, and
calculating control commands based on the predicted state variables, the predicted uncertainties, and the confirmation check, the control commands being configured to control the maneuvering of the marine vessel from the initial position to the subsequent position

8. The method according to any one of the preceding claims, comprising determining an uncertainty in the outline of the marine vessel over the prediction horizon, wherein the uncertainty in the outline is included when generating feasible trajectory data.

9. The method according to any one of the preceding claims, wherein an environmental disturbance parameter and respective uncertainty is estimated at least for the present wind speed and direction.

10. The method according to any one of the preceding claims, wherein environmental disturbance parameters and respective uncertainties are estimated for each of present wind conditions and local sea current speed and direction.

11. The method according to any one of the preceding claims, wherein the obstacles are both below sea level and above sea level.

12. The method according to any one of the preceding claims, wherein the environmental data is measured on-board the marine vessel.

13. A control unit configured to perform the steps of any one of the preceding claims.

14. A marine vessel comprising the control unit of claim 13.

15. A computer program product comprising program code for determining a feasible trajectory from an initial position to a subsequent position for a marine vessel traveling on water, the computer program product comprises:
code for determining initial state variables for the marine vessel at the initial position including present position of the marine vessel and present heading direction of the marine vessel in relation to the surrounding environment;
code for acquiring position data indicating positions of obstacles near the marine vessel;
code for acquiring environmental data including at least one of present wind conditions, wave characteristics, and local sea current speed and direction;
code for estimating environmental disturbance parameters and respective uncertainties from the environmental data;
code for predicting subsequent state variables for the marine vessel and respective uncertainties at future time steps for a prediction horizon based on a maneuver model of a marine vessel describing a motion of a marine vessel, the initial state variables, the position data, and the environmental disturbance parameters and respective uncertainties; and,
code for generating feasible trajectory data including a trajectory uncertainty for the marine vessel based on the prediction.
